# EUROPEAN PATENT APPLICATION

(11) **EP 1 669 642 A1**
(43) Date of publication of application: **14.06.2006**
(21) Application number: 05027204.6
(22) Date of filing: 13.12.2005
(51) Int. Cl.: F16H 61/02, H04M 1/725

(54) **Mobile communication terminal having a gear-shifting information providing function and method of gear-shifting information using the same**

(30) Priority: 13.12.2004 KR 2004104865
(71) Applicant: LG Electronics Inc., Yongdungpo-gu Seoul (KR)
(72) Inventor: Kim, Ki Won, Gangbuk-gu Seoul (KR)
(74) Representative: Urner, Peter

(57) **Abstract**

A mobile communication terminal and method of providing gear-shifting information using the same are disclosed, by which the gear-shifting information suitable for a vehicle speed can be provided to a novice or beginning driver of the vehicle. In one embodiment, a mobile communication terminal includes a speed detection unit configured to acquire speed data, a control unit configured to analyze the speed data and output a corresponding control signal if the speed data satisfies a gear-shifting condition, and a voice output unit configured to output a gear-shifting announcement message that corresponds to the control signal.

## Description

### CROSS-REFERENCE TO RELATED APPLICATIONS

This United States Patent Application claims the benefit of the Korean Patent Application No. 10-2004-0104865, filed on December 13, 2004, which is hereby incorporated by reference as if fully set forth herein.

### BACKGROUND OF THE INVENTION

### The Field of the Invention

The present invention relates to a mobile communication terminal, and more particularly, to a mobile communication terminal and method for providing gear-shifting information to the operator of a vehicle. Although the present invention is suitable for a wide scope of applications, it is particularly suitable for providing gear-shifting information based on the detected speed of a vehicle.

### Related Technology

Generally, the transmission of a vehicle can be classified as either an automatic transmission or a manual transmission. An automatic transmission is generally more costly than a manual transmission. However, a manual transmission is typically more complex to operate for some drivers.

For example, in order to properly operate a vehicle equipped with a manual transmission, the driver must manually shift the gears. Manual gear-shifting requires that the driver know when to shift from one gear to another. One way for a driver to know when to shift gears is by monitoring the speed of the vehicle. For example, in a vehicle having a manual transmission with five gears, it may be appropriate to shift from first gear to second gear when the vehicle reaches 20 km/hr, from second gear to third gear when the vehicle reaches 40 km/hr, from third gear to fourth gear at 60 km/hr, and from fourth gear to fifth gear at 80 km/hr. Therefore, an appropriate time for a driver to shift from one gear to another gear is when a vehicle reaches a predetermined speed.

A driver can determine a vehicle's speed by watching the vehicle's speedometer. However, watching the vehicle's speedometer while driving can be distracting to the driver, and can increase the possibility of an accident. In addition, if the driver does not gear-shift at the appropriate time, the vehicle's engine can stall or lag, or an undesirably heavy load may be placed on the vehicle's engine. Thus, it would be an improvement in the art to provide a facility by which an operator of a manual transmission could be alerted of the need to shift gears at the appropriate time. Further, it would be desirable if the driver could be alerted in a manner that is not distracting.

### SUMMARY OF THE INVENTION

Accordingly, the present invention is directed to an apparatus and method that addresses many of the problems associated with the proper operation of a vehicle's manual transmission.

Thus, one object of the present invention is to provide a mobile communication terminal and a method of operation that provides information to a novice or inexperienced driver such that transmission gears can be shifted at the appropriate times, such as in accordance with the speed of the vehicle.

Another object of the present invention is to provide a mobile communication terminal that helps prevent a vehicle from being damaged due to the driver's failure to shift gears at the appropriate time..

Additional advantages, objects, and features of the invention will be set forth in part in the description which follows and in part will become apparent to those having ordinary skill in the art upon examination of the following or may be learned from practice of the invention as claimed herein.

In general, a mobile communication terminal having a gear-shifting information providing function is disclosed. In one example embodiment, the mobile communication terminal is implemented as a mobile cellular phone or mobile personal digital assistant (PDA). The mobile terminal includes a speed detection unit configured to acquire speed data, a control unit configured to analyze the speed data and to output a corresponding control signal if the speed data corresponds to a gear-shifting condition, and a voice output unit configured to output a gear-shifting announcement message that corresponds to the control signal. The vehicle operator then responds to the gear-shifting announcement message by shifting gears in the manner indicated.

In preferred embodiments, the mobile communication terminal further includes a memory configured to store one or more gear-shifting conditions, where each gear-shifting condition corresponds to an appropriate traveling speed at which a transmission of a vehicle should be shifted from one gear to another.

The speed detection unit can comprise a two-axis acceleration sensor or a global positioning system (GPS). Other speed detection devices and techniques could also be used.

In one implementation, the control unit includes an analog/digital converter configured to receive analog traveling speed data acquired by the speed detection unit and to convert the analog traveling speed data to digital traveling speed data. In this embodiment a processor is then preferably configured to receive the digital traveling speed data, and then determine whether the digital traveling speed data meets a prescribed gear-shifting condition. If so, the processor will output a control signal that corresponds to the prescribed gear shifting condition. This embodiment further includes a codec configured to generate a gear-shifting announcement message that corresponds to the control signal output by the processor. The gear-shifting announcement message can be generated from a digital voice recording.

In another exemplary embodiment, a method of providing gear-shifting information using a mobile communication terminal includes the steps of acquiring a traveling speed, deciding whether the traveling speed satisfies a gear-shifting condition, loading an appropriate voice message/indicator that corresponds to the traveling speed if the gear-shifting condition is satisfied, and outputting a gear-shifting announcement message generated from the voice message. Acquiring the traveling speed can be accomplished using a two-axis acceleration sensor that is in communication with the mobile communication terminal. Alternatively, acquiring the traveling speed can be accomplished using a global position system (GPS) that is in communication with the mobile communication terminal. The gear-shifting condition can be set by a user, or can be a pre-set condition.

In another exemplary embodiment, outputting the gear-shifting announcement message further includes decoding the digital voice recording which has been digitally compressed, and converting the decoded digital voice recording to an analog signal. The digital voice recording can be recorded by a user, or can be pre-set.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of an exemplary mobile communication terminal; and

FIG. 2 is a flowchart of an exemplary method of providing vehicle gear-shifting information using a mobile communication terminal.

### DETAILED DESCRIPTION OF EXAMPLE EMBODIMENTS

Reference will now be made in detail to embodiments of the present invention, examples of which are illustrated in the accompanying drawings. Wherever possible, the same reference numbers will be used throughout the drawings to refer to the same or like parts.

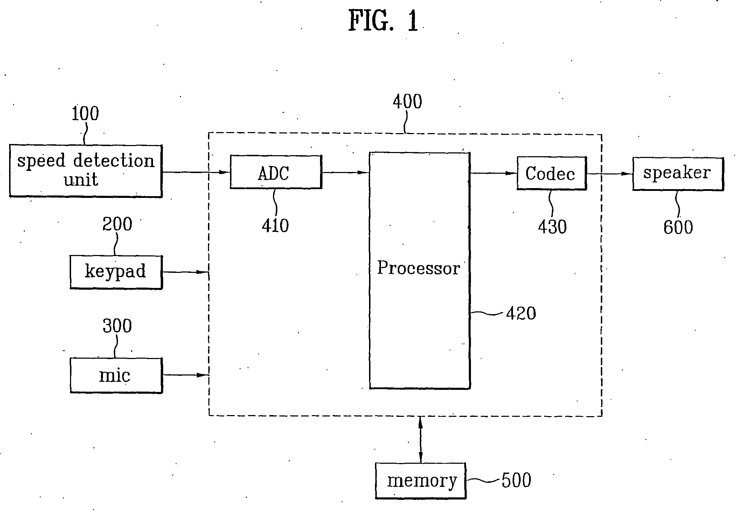

FIG. 1 is a block diagram of one example of an embodiment of the present invention. As is shown, a mobile communication terminal is provided. The mobile communication terminal preferably includes a speed detection unit 100 that is configured to acquire the current traveling speed data of a vehicle. The speed detection unit 100 communicates with a control unit 400 that is configured to analyze the traveling speed of the vehicle and to then output a corresponding control signal if the traveling speed corresponds to a gear-shifting condition.

A particular gear-shifting condition can correspond to a predefined vehicle speed. For example, one condition could require that a user shift from first gear to second gear when the vehicle accelerates to 20 km/hr (the "20 km/hr gear-shifting condition"). Once the vehicle accelerates to 20 km/hr, the control unit 400 would output a control signal corresponding to the 20 km/hr gear-shifting condition because the condition has been satisfied.

In the illustrated embodiment, the control unit 400 communicates with a speaker 600 which is configured to output a gear-shifting announcement message that corresponds to the control signal output by the control unit 400. The speaker 600 can be implemented with an external speaker of the mobile communication terminal, an ear microphone, a hands-free speaker, or the like. The control unit 400 also communicates with a memory 500 which is configured to store one or more gear-shifting conditions and provide the one or more gear-shifting conditions to the control unit 400. The control unit 400 can also receive input from a keypad 200 that allows a user to program the control unit 400 and manually set gear-shifting conditions.. The control unit 400 can also be configured to receive input from a microphone 300 configured to convert the analog voice of a user into a digital voice recording that can be stored in the memory 500 and utilized by the control unit 400. Hence, in illustrated embodiments data stored and utilized by the control unit 400 can include vehicle speed data acquired by the speed detection unit 100, voice recordings received through the microphone 300, and keypad entries received through the keypad 200.

The speed detection unit 100 can include a two-axis acceleration sensor or a global positioning system (GPS), or any other appropriate speed detection apparatus. In general, the speed of the vehicle can be detected using displacement information of a current position of the vehicle per unit time. The traveling speed data of the vehicle is acquired per a predetermined time and the acquired traveling speed data is then transferred to an analog/digital (A/D) converter 410 of the control unit 400.

In one presently preferred embodiment, the control unit 400 can be implemented as a mobile station modem (MSM) of a mobile communication terminal. The control unit 400 preferably includes the analog/digital converter 410 which is configured to receive analog traveling speed data acquired by the speed detection unit 100 and to convert the analog traveling speed data to digital speed data. The control unit 400 also preferably includes a processor 420 that is configured to receive the digital traveling speed data converted by the analog/digital converter 410 and to decide whether the traveling speed data satisfies a prescribed gear-shifting condition. When the processor 420 determines that a gear-shifting condition has been satisfied, processor 420 is configured to output a control signal that corresponds to the gear-shifting condition that has been satisfied. In the illustrated embodiment the control unit 400 also includes a codec 430 that is configured to generate a gear-shifting announcement message that corresponds to the control signal for output by the speaker 600.

In one exemplary embodiment, the analog/digital converter 410 receives the analog vehicle traveling speed data acquired by the speed detection unit 100 and converts the analog vehicle traveling speed data to digital vehicle traveling speed data. The digital vehicle traveling speed data is provided to the processor 420. The processor 420 then takes the digital vehicle traveling speed data and determines whether a gear-shifting condition is satisfied. Each gear-shifting condition is mapped to a digital voice recording stored in the memory 500. If the gear-shifting condition is satisfied, the digital voice recording that is mapped to the gear-shifting condition is loaded by the processor 420 in order to be transferred to the codec 430. The codec 430 converts the digital voice recording provided via the processor 420 to a gear-shifting announcement message, which is an analog signal. The speaker 600 outputs the gear-shifting announcement message provided from the codec 430 as an audible sound, preferably in the form of a human voice.

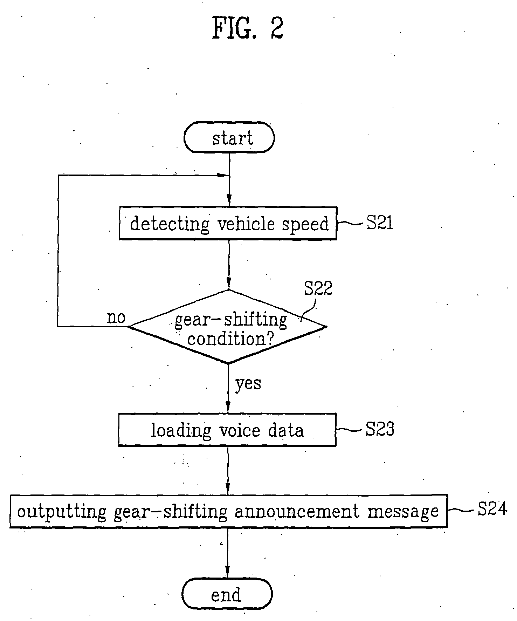

FIG. 2 is a flowchart of an exemplary method of providing vehicle gear-shifting information using a mobile communication terminal. The discussion of FIG. 2 will make reference to the components illustrated in FIG. 1 where appropriate. With reference now to FIG. 2, a "Gear-Shifting Announcement Setup" menu (not shown) is added to the menu items of a mobile communication terminal. This menu allows a user to set up gear-shifting announcement messages in his or her mobile communication terminal. In one embodiment, gear-shifting announcement messages can be pre-stored in the memory of the mobile communication terminal by the manufacturer of the mobile communication terminal. Alternatively, a gear-shifting announcement message can be stored in the memory by the user. A gear-shifting announcement message can be recorded by the user and automatically stored in the memory of the mobile communication terminal, or can be obtained from an external source and manually loaded into memory of the mobile communication terminal by the user.

In preferred embodiments. gear-shifting announcement messages are voice recordings that are used to notify a user that the user should shift from one gear to another. For example, a gear-shifting announcement message might be a voice recording that merely states "please shift gears." Alternatively, more detailed recordings can be utilized. For example, "Your current speed is 20km/hour. Please, shift to second gear." Another gear-shifting announcement message might state, "Your current speed is 40km/hour. Please, shift to third gear." Another gear-shifting announcement message might state, "Your current speed is 60km/hour. Please, shift to fourth gear." Another gear-shifting announcement message might state, "Your current speed is 80km/hour. Please, shift to fifth gear." Each of these exemplary voice recordings, which when played are gear-shifting announcement messages, can be stored in the memory of the mobile communication terminal. Each voice recording that is stored in the memory is mapped to correspond to a specific gear-shifting condition, which in turn corresponds, for example, to the speed of a vehicle.

Once a user has accessed the "Gear-Shifting Announcement Setup" menu of the mobile communication terminal in order to setup the gear-shifting announcement messages, the method of FIG. 2 can start. At stage S21, traveling speed information is acquired from a speed detection unit 100. Next, at stage S22, a processor 420 checks whether the acquired traveling speed information satisfies a gear-shifting condition stored in memory 500. If the acquired traveling speed information does satisfy a gear-shifting condition, at stage S23, voice data corresponding to the gear-shifting condition is loaded into the processor 420. The voice data that is loaded in the processor 420 is a voice recording that corresponds to the satisfied gear-shifting condition. Finally, at stage S24, the loaded voice data is decoded, the decoded data is converted to a gear-shifting announcement message, which is an analog signal, via a codec 430, and the gear-shifting announcement message is output via a speaker 600.

Accordingly, embodiments of the present invention provides gear-shifting information according to vehicle traveling speed that is output as an audible voice message, thereby enabling more safe and efficient gear-shifting by the driver of a vehicle.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile communication terminal having a gear-shifting information providing function, comprising:
a speed detection unit configured to acquire speed data;
a control unit configured to analyze the speed data and to output a corresponding control signal if the speed data satisfies a gear-shifting condition; and
an audible output unit configured to output a gear-shifting announcement message that corresponds to the control signal.

2. The mobile communication terminal of claim 1, further comprising a memory configured to store one or more gear-shifting conditions, where each gear-shifting condition corresponds to an appropriate speed at which a transmission of a vehicle should be shifted from one gear to another.

3. The mobile communication terminal of claim 1, wherein the speed detection unit comprises a two-axis acceleration sensor.

4. The mobile communication terminal of claim 1, wherein the speed detection unit comprises a global positioning system (GPS).

5. The mobile communication terminal of claim 1, wherein the control unit comprises:
an analog/digital converter configured to receive speed data acquired by the speed detection unit and to convert the speed data to digital speed data;
a processor configured to receive the digital speed data, and to determine whether the digital speed data satisfies a gear-shifting condition, and, if so, to output a control signal that corresponds to the gear shifting condition; and
a codec configured to generate a gear-shifting announcement message that corresponds to the control signal output by the processor.

6. The mobile communication terminal of claim 1, wherein the gear-shifting announcement message is generated from a digital voice recording.

7. A method of providing gear-shifting information using a mobile communication terminal, comprising the steps of:
acquiring a vehicle speed;
determining whether the acquired speed satisfies a gear-shifting condition;
accessing voice data corresponding to the speed if the gear-shifting condition is satisfied; and
outputting a gear-shifting announcement message based on the accessed voice data.

8. The method as recited in claim 7, wherein acquiring the speed is accomplished using a two-axis acceleration sensor that is in communication with the mobile communication terminal.

9. The method as recited in claim 7, wherein acquiring the speed is accomplished using a global position system (GPS) that is in communication with the mobile communication terminal.

10. The method as recited in claim 7, wherein the gear-shifting condition is set by a user.

11. The method as recited in claim 7, wherein outputting the gear-shifting announcement message comprises the steps of:
decoding a digitally comprised form of the voice data; and
converting the decoded digital voice data to an analog signal.

12. The method of claim 7, wherein the voice data is recorded by a user.
